# EUROPEAN PATENT APPLICATION

(11) **EP 0 948 209 A2**
(43) Date of publication of application: **06.10.1999**
(21) Application number: 99200583.5
(22) Date of filing: 02.03.1999
(51) Int. Cl.: H04N 7/26

(54) **Parallel high definition encoding**

(30) Priority: 03.04.1998 GB 9807206
(71) Applicant: NDS LIMITED, West Drayton, Middlesex UB7 ODQ (GB)
(72) Inventor: Davies, Colin, Fordingbridge, Hampshire SP6 2NS (GB); Murray, Kevin Alistair, Lockerley, Romsey, Hants SO51 0JR (GB); Bock, Alois Martin, Eastleigh, Hampshire SO53 4RH (GB); Huggett, Anthony Richard, Eastleigh, Hampshire SO50 5PZ (GB); Funnel, John Stuart, Southampton SO15 2TU (GB); Warburton, Richard John, Hedge End, Southampton SO30 2RP (GB); Stubbings, Clive Anthony, Eastleigh, Hampshire SO50 7NW (GB)
(74) Representative: Anderson, Angela Mary

(57) **Abstract**

According to one aspect of the present invention there is provided a digital television system comprising: a splitter for splitting a television image into a spatial array of elements; a plurality of encoders for encoding each of the elements; a combiner for re-combining the encoded elements such that they are capable of regenerating the television image.

This has a number of advantages over the prior art. In particular the invention provides a real time, efficient, cost effective HDTV system which can support both HD and SD programming.

## Description

This invention relates to the encoding and subsequent decoding of High Definition Television (HDTV) signals. In particular, this invention provides a system and method for real time, high quality encoding and decoding of a HDTV signal.

In recent years the interest in HDTV has been growing and with the advent of digital television the idea of digital High Definition Television (DHDTV) has materialised. There have been a number of tests which suggest that DHDTV is feasible and now the need exists for a fully operational system which is affordable and practical.

HDTV can come in a myriad of different formats; the table below shows five main formats:-

| **Horizontal Pixels** | **Vertical Lines** | **Frames** | **Pixel Rate** | **Aspect Ratio** |
|---|---|---|---|---|
| 1920 | 1080 | 30 | 62.28 | 16 : 9 |
| 1280 | 720 | 60 | 55.296 | 16 : 9 |
| 704 | 480 | 60 | 20.275 | 16 : 9 or 4 : 3 |
| 640 | 480 | 30 | 10.138 | 4 : 3 |
| 1280 | 720 | 30 | 27.648 | 16 : 9 |

Prior to this invention the generation of digitally compressed HDTV signals required costly encoding equipment due to the size and high sampling rates used to transmit HDTV signals.

In addition early adopters of HDTV technology may be required to continue to provide standard sized (SD) programming. Using the currently proposed HDTV methods SD programming may not be supported.

Accordingly one object of the present invention is to overcome the problems associated with the prior art.

According to one aspect of the present invention there is provided a digital television system comprising: a splitter for splitting a television image into a spatial array of elements; a plurality of encoders for encoding each of the elements; a combiner for re-combining the encoded elements such that they are capable of regenerating the television image.

This has a number of advantages over the prior art. In particular the invention provides a real time, efficient, cost effective HDTV system which can support both HD and SD programming.

According to a second aspect of the present invention, there is provided a method of processing a television image comprising: splitting the television image into a spatial array of elements; encoding each of the elements with a separate encoder; recombining the encoded elements such that they are capable of regenerating the television image.

This has the advantage of being able to provide a method of broadcasting HDTV programming by modifying an existing broadcasting system. This offers considerable cost savings and other associated advantages.

Reference will now be made by way of example to the accompanying drawings, in which:-
Figure 1 is a block diagram of an HDTV system according to the present invention;
Figure 2 is a block diagram of a HDTV image to show how the figure 1 system works; and
Figure 3 is a representation of a transport stream.

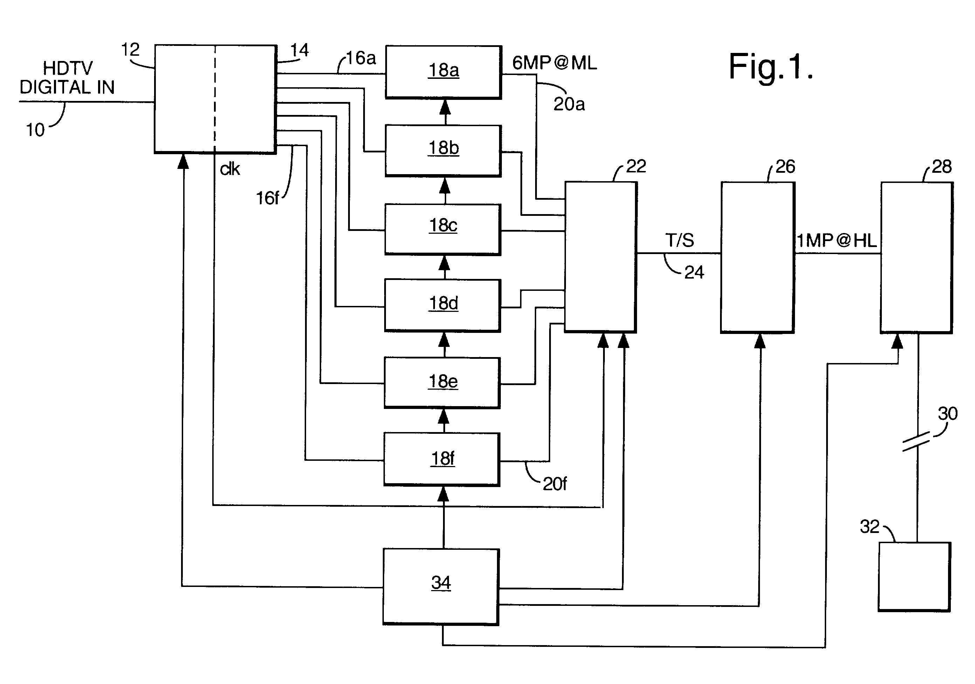

The HDTV system of the present invention is shown in figure 1. An HDTV digital input 10 is passed into a pre-processor 12. The pre-processor carries out the filtering noise reduction, colour space sub sampling and addition of synchronisation on the HDTV image. The HDTV signal is then split into a number of smaller sized images or elements by splitter 14. Further details of the function of the pre-processor are described in our copending United Kingdom patent application 9807205.1. The number of elements will be dependant on the profile of the original HDTV image. In the example shown the HDTV image is split into six signals: 16a-16f. Each of the six signals 16a - 16f are then passed to respective encoders 18a-18f. Each of the encoders is slightly modified such that it does not carry out the normal pre-processing steps prior to encoding. This is due to the fact that the pre-processing of the whole HDTV image has already been carried out in pre-processor 12. The encoders then compress the six signals 16a - 16f to produce six so called MPEG MP @ ML signals 20a - 20f (Main profile @ Main Level).

The six MPEG signals 20a - 20f are then multiplexed together by multiplexer 22 to form a single output transport stream 24. The multiplexer may or may not be operating as a statistical multiplexer, depending on the specific requirements of the system. The transport stream is then passed into a post processing unit 26. The post processing unit carries out a number of processes on the transport stream. The main process concerns repositioning and resynchronising the six MPEG signals in the transport stream such that the output is capable of being decoded as an HDTV image again. This is not a straight forward exercise as will be described in greater detail below and still greater detail in our co-pending United Kingdom patent application 9807203.6. The output from the post processing is a HDTV signal (MP @ HL - Main Profile @ High Level) which is passed to a modulator 28 and then passed via a broadcast medium 30 to a receiver 32. The broadcast medium could take the form of a satellite system, a cable system, a terrestrial system or any other appropriate medium. The system is controlled by a control computer 34. This manages the synchronisation and co-ordination of the whole system.

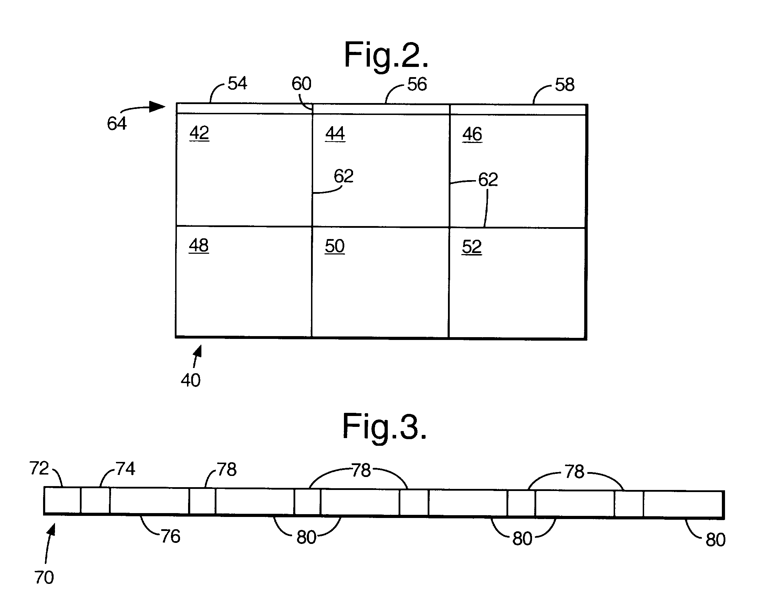

Further details of the pre and post processors will now be described with reference to figure 2. An HDTV image is shown as 40. This is an HDTV signal which is 1920 pixels by 1080 pixels. In order to encode the image using standard encoders the image is split into a number of elements. In this case into six elements 42, 44, 46, 48, 50, 52, each being 640 x 540 pixels.

The pre-processor acts on the whole of image 40 before it is split into six elements. As previously indicated the pre-processor carries out all the filtering and preencoding processes on the whole image. The image is then split into the six elements 42, 44, 46, 48, 50 and 52 by the splitter. The encoding processes are carried out on each element of the image. Encoder 18a encodes element 42, encoder 18b encodes element 44 and so on.

The process of splitting the image is relatively straightforward when compared to the process of putting it back together again. After the image has been split and encoded there is a transport stream which includes parts of each of the elements of the image. The order in which the parts occur will be dependant on a number of features. One feature is the relative complexity of the elements which may mean that the bitrate of each element is different. Another feature will be that there are audio and possibly data signals associated with the whole image but which may be associated with a given element in the encoding process. Figure 3 shows an example of a transport stream 70. The transport stream includes an audio and data packet 72, a first header 74 associated with element 42, and a number of packets of information 76 which are the encoded signal of element 42. Other elements of the image are represented in the transport by respective headers 78 and information or video packets 80.

One of the main difficulties of the present invention is how to put the encoded elements together such that they represent image 40 of figure 2. In addition the encoded image has to be capable of being decoded by the receiver to produce image 40. It is not a straightforward exercise putting the encoded elements of the image together as will be described in detail below.

When an image is encoded it is compressed such that only about 1% of the information in the image is needed to represent it in encoded form. This is done by carrying out comparison of one frame of the image with the next and measuring the difference. This difference can then be transmitted instead of a full frame of the image. In addition motion compensation processes are carried out to further reduce the amount of encoded information. There are problems with this on image 40 for a number of reasons. Since elements of the picture are being encoded separately there may be problems at the joints 62 between elements. This can mean that when the elements are put back together there are clearly visible joins in the image. This would not be satisfactory for a viewer. In addition to spatial problems there can also be temporal problems. For example, if a first frame of element 42 is put back together with a second frame of element 44 there will be temporal distortion. This again would not be satisfactory for a viewer. A further problem which has to be overcome is how to put the encoded elements of the image together so they will be decodable by the receiver.

To be correctly decoded by the receiver the lines of the whole image must come in the correct order. The first line 64 of the image 40 is shown in figure 2. As can be seen the first line is made up of three segments 54, 56 and 58. These are respectively parts of elements 42, 44 and 46 each of which have been encoded separately.

The problems identified above are overcome by passing the transport stream 24 through the post processing unit 26. The post processing unit takes the transport stream 70 and strips off the headers (74 and 78) audio and data 72. These are stored until later. The post processing unit then puts together the information packages 76 and 80 such that the first line is constructed, followed by the second, the third etc. Packets from segment 42 preceding segments from 44 and so on. In this way an encoded form of image 40 is generated. Great care is taken with the repositioning of each piece of information and with the synchronisation of the whole process. A detailed description of the post processing unit can be found in our co-pending United Kingdom patent application 9807203.6

It is possible to incorporate redundancy into the system by inclusion of extra encoders. In addition, the system can be used for HDTV, standard TV or combinations thereof by control of use of the pre-processing and post-processing units as required and use of the encoders for either HD or SDTV.

It will be appreciated that this invention is not limited to just so called HDTV, but can be used in any system where there is a need to transmit an image that is bigger than the available encoders can cope with.

## Claims

1. A digital television system comprising:-
a splitter for splitting a television image into a spatial array of elements;
a plurality of encoders for encoding each of the elements;
a combiner for re-combining the encoded elements such that they are capable of regenerating the television image.

2. The apparatus of claim 1, further comprising a multiplexer for combining the encoded elements into a single data stream.

3. The apparatus of claim 2, wherein the single data stream includes signal packets relating to each encoded element and control packets relating to the control of each encoded element.

4. The apparatus of claim 3, wherein the combiner removes the control packets from the data stream, repositions and resynchronises the signal packets from the respective encoded elements wherein the signal packets form an image signal which is capable of being decoded to produce the image; and recombines the control packets with the image signal.

5. The apparatus of claim 4, further comprising a remote receiver for receiving and decoding the image signal so as to produce the image.

6. The apparatus of any preceding claim, wherein the television image is a High Definition Television (HDTV) image.

7. The apparatus of any preceding claim, wherein the splitter splits the image into six elements.

8. The apparatus of claim 7, wherein there are six encoders.

9. A method of processing a television image comprising:
splitting the television image into a spatial array of elements;
encoding each of the elements with a separate encoder;
recombining the encoded elements such that they are capable of regenerating the television image.

10. The method of claim 9, further comprising multiplexing the encoded elements into a single data stream.

11. The method of claim 10 further comprising the data stream including signal packets relating to each encoded element and control packets relating to the control of each encoded element.

12. The method of claim 11, wherein the combining step comprises:-
removing the control packets from the data stream;
repositioning and resynchronising the signal packets from the respective encoded elements such that the signal packets form an image signal which is capable of being decoded to produce the image; and
recombining the control packets with the image signal.

13. The method of claim 12, further comprising receiving and decoding the image signal so as to produce the image at a remote receiver.

14. The method of any of claims 9 to 13, further comprising providing the television image as a High Definition Television (HDTV) image.

15. The method of any of claims 9 to 14, further comprising splitting the image into six elements.
